# EUROPÄISCHE PATENTSCHRIFT

(11) **EP 2 663 990 B1**
(45) Veröffentlichungstag und Bekanntmachung des Hinweises auf die Patenterteilung: **03.10.2018**
(21) Anmeldenummer: 11802278.9
(22) Anmeldetag: 06.12.2011
(51) Int. Cl.: H01H 31/00, H02B 13/00, H01H 39/00

(54) **HOCHSPANNUNGSSCHALTANLAGE**
HIGH-VOLTAGE SWITCHING SYSTEM
INSTALLATION DE COMMUTATION HAUTE TENSION

(30) Priorität: 12.01.2011 DE 102011008445; 15.04.2011 DE 102011017307
(43) Veröffentlichungstag der Anmeldung: 20.11.2013
(73) Patentinhaber: ABB Schweiz AG, 5400 Baden (CH)
(72) Erfinder: PETERS, Hauke, 63457 Hanau (DE)
(74) Vertreter: ABB Patent Attorneys
(86) Internationale Anmeldenummer: PCT/EP2011/006090
(87) Internationale Veröffentlichungsnummer: WO 2012/095130

(56) Entgegenhaltungen:
- EP-A1- 0 621 616
- EP-A1- 2 034 503
- WO-A1-02/087043

## Beschreibung

Die Erfindung betrifft eine Hochspannungsschaltanlage mit einem mit Isoliergas, beispielsweise SF₆, gefüllten, unter Druck stehenden, hermetisch verschlossenen Schaltergehäuse, in welchem wenigstens ein aus einem festen und einem beweglichen Kontaktstück mit einem Stellantrieb gebildetes Kontaktpaar sowie elektrische Leiter angeordnet sind, welche gegen Erde isoliert sind, wobei das Schaltergehäuse einen Gasraum bildet.

Durch Schäden, Fehlbedienung oder außergewöhnliche Betriebsbedingungen bedingt, können Fehlerzustände innerhalb der Kapselung von Schaltanlagen auftreten beziehungsweise entstehen, die in seltenen Fällen zu einem Störlichtbogen und somit zu einer Gefährdung von Mensch und Material führen.

Derartige Fehlerzustände gilt es dringend zu vermeiden, mit denen ein derartiger Fehlerzustand schnellstmöglich, das heißt, bevor ein größerer Schaden resultiert, beendet werden kann.

Dazu werden Schnellerder, auch als Schnellkurzschließer, Schnellerdungsschalter oder Erdungsschalter bezeichnet, eingesetzt, dessen Kontaktstücke mit möglichst hoher Geschwindigkeit geschlossen werden, wobei der Schnellerder gegen einen Kurzschlussstrom schalten soll.

Schnellkurzschließer sind in der Niederspannungs- und Mittelspannungstechnik in verschiedenen Variationen bekannt. Dabei werden unterschiedliche Verfahren angewendet, um einen Kurzschlussstrom nach einer möglichst kurzen Zeit sicher gegen Erde abzuleiten. Damit soll erreicht werden, dass ein Lichtbogen, der in einer Anlage entstanden ist, verlöscht, der Kurzschluss über sichere Anlagenkomponenten geleitet wird und dann über einen Leistungsschalter abgeschaltet werden kann. Da der Lichtbogen nach dem Kurzschließen gegen Erde verlöscht, werden keine weiteren Schäden in der Anlage verursacht.

Zu diesem Zweck wurden bereits für den Einsatz bei Mittelspannungs-Schaltanlagen für Spannungen bis 30 kV, bei welchen üblicherweise Vakuum-Schaltkammern zum Einsatz kommen, neue ultraschnelle Erdungsschalter, auch UFES (Ultra Fast Earthing Switch) genannt, entwickelt.

Bei den bekannten Anlagen besteht dieser ultraschnelle Erdungsschalter aus drei Primärschaltelementen und einer elektronischen Erfassungs- und Auslöseeinheit. Das Primärschaltelement hat die Abmessungen, die Form und die Befestigungspunkte ähnlich eines 24-kV-Isolierstützers und beinhaltet eine in Epoxydharz umweltgeschützt eingebettete Doppel-Vakuumschaltkammer sowie einen integrierten ultraschnellen Mikro-Gasgenerator-Kolbenantrieb.

Aus dielektrischer Sicht enthält jede Vakuum-Schaltkammer zwei Vakuumstrecken, die durch eine Membran getrennt sind. In die erste Vakuumstrecke hineinragend befindet sich ein auf Erdpotential liegender Kontaktstift, der fest mit dem Antriebskolben verbunden ist. Die zweite Vakuumstrecke enthält die auf Hochspannungspotenzial liegende Festkontaktbuchse. Jedes Primärschaltelement ist zudem mit einem integrierten ultraschnellen Mikro-Gasgenerator ausgestattet, der den beweglichen Kolben samt Kontaktstift zum Schaltvorgang antreibt. Dieser Mikro-Gasgenerator ähnelt in Art und Funktion den Gasgeneratoren von Kraftfahrzeug-Airbags.

Kommt es in einer derart ausgestatteten Mittelspannungs-Schaltanlage zu einem internen Störlichtbogen, erfasst die Elektronik über Stromwandler den Fehlerstrom sowie über optische Sensoren das Licht des Lichtbogens im Schottraum und aktiviert nahezu gleichzeitig den Gasgenerator.

Der erzeugte Gasdruck treibt den beweglichen Kolben in die erste Teilkammer. Der Kontaktstift durchstößt die Membran und verrastet daraufhin dauerhaft, prellfrei und robust mit dem Festkontakt. Es entsteht ein solider metallischer Kurzschluss gegen Erde, der einen entstandenen Störlichtbogen zum Verlöschen bringt.

Als wesentlicher Nachteil der bekannten Anordnungen erweist sich die Schwierigkeit, derartige Anordnungen in Hochspannungsschaltanlagen mit Spannungen von 50 bis 500 kV einzubauen, was im Wesentlichen mit der dort erforderlichen größeren Isolierfestigkeit zusammenhängt.

So beruht der ultraschnelle Erdungsschalter in der Mittelspannungstechnik beispielsweise auf der Isolation mittels Vakuumtechnik. Deren Anwendung bereitet nur im unteren Spannungsbereich bis maximal 42 kV keine größeren Probleme.

Bei höheren Spannungen sind entweder nicht gewünschte Baugrößen zwecks Einhaltung der erforderlichen Isolierabstände erforderlich oder aber eine andere Technologie, welche dann bei raumsparender Bauweise dennoch die gewünschte schnelle Abschaltung beim Auftreten von Fehlerzuständen herbeiführt.

Die Druckschrift EP 2 034 503 zeigt eine Niederspannungs-, Mittelspannungs- oder Hochspannungsschaltanlage mit einer Vakuumschaltkammer, in der ein Kurzschlussgerät angeordnet ist. Der Vakuumbereich, in dem ein festes Kontaktstück angeordnet ist, wird mittels einer Membran unterteilt, wobei die Membran an ein bewegliches Kontaktstück angeformt ist. Das bewegliche Kontaktstück ragt also durch die Membran hindurch. Die Membran ist mit einer Sollbruchstelle versehen. Zum Schalten bewegt sich ein Kolben in Richtung Membran, durchdringt diese an der Sollbruchstelle und nimmt dabei das bewegliche Kontaktstück mit, hin zum festen Kontaktstück. An einer Seite des Kolbens kann eine Schneidkante angebracht sein, welche der Sollbruchstelle gegenüberliegt.

Die Druckschrift WO 02/087043 offenbart eine Sammelschienenverbindung von einer Schaltanlage zu einem luftisolierten Messfeld, insbesondere bei einer gasisolierten Mittelspannungsschaltanlage.

Ausgehend von diesem Stand der Technik ist es Aufgabe der Erfindung, eine Hochspannungsschaltanlage der eingangs genannten Art anzugeben, die eine Schnellabschaltung beim Auftreten von Fehlerzuständen auf möglichst einfache Weise zuverlässig ermöglicht.

Diese Aufgabe wird gelöst durch die Merkmale des Anspruchs 1.

Es ist vorgesehen, dass an dem Schaltergehäuse wenigstens eine Isolierbuchse mit einem Phasenkontakt vorgesehen ist, welche mittels eines Isolierstopfens verschlossen bzw. abgedeckt ist, und dass außerhalb des Schaltergehäuses an der wenigstens einen Isolierbuchse ein weiteres Kontaktsystem angeordnet ist, welches als Ultraschnell-Kurzschließer arbeitet. Der Ultraschnell-Kurzschließer wird auch als UFES (ultra fast earthing switch) bezeichnet und schließt bei Vorliegen eines Fehlerzustandes in dem Schaltergehäuse den Phasenkontakt der Isolierbuchse mit Erdpotential kurz, indem der bewegliche Kolben der Kolben-Zylinder-Anordnung auf seiner dem zu kontaktierenden festen Kontaktstück zugewandten Stirnseite mit einer Kante versehen ist, welche den Isolierstopfen bei Vorliegen eines Fehlerzustandes, im Auslösefall, durchschneidet.

Gemäß einer vorteilhaften Ausgestaltung ist die erfindungsgemäße Hochspannungsschaltanlage dadurch gekennzeichnet, dass das weitere Kontaktsystem in einem mit der isolierbuchse gasdicht verbundenen Gasraum angeordnet ist.

Entsprechend der Erfindung dient das weitere Kontaktssystem als Erdungsschalter, der bei Auftreten eines definierten Fehlerzustandes von einem Antrieb beaufschlagbar ist. Der Erdungsschalter löst bei Auftreten eines definierten Fehlerzustandes aus und führt durch Schließen des weiteren Kontaktsystems, also dem Ineinandergreifen des beweglichen Kontaktstückes in das feste Kontaktstück, einen Kurzschluss zwischen dem Leistungspotential und Erdpotential herbei.

Entsprechend einer bevorzugten Weiterbildung der Erfindung ist eine Erfassungseinheit zur Detektion von Fehlerzuständen in dem Schaltergehäuse vorgesehen, die mit einer Auslöseeinheit zusammenarbeitet, welche den Antrieb zur Ansteuerung des weiteren Kontaktsystems aufnimmt.

Dabei erweist es sich als besonders vorteilhaft, dass die Auslöseeinheit mit einem Gasgenerator ausgestattet ist, der als Antrieb für das weitere Kontaktsystem dient und mit einer Kolben-Zylinder-Anordnung zusammenarbeitet. Der Gasgenerator steht in Wirkverbindung mit einem Zündgerät, welches im Auslösefall den Gasgenerator startet.

In vorteilhafter Weiterbildung der erfindungsgemäßer Hochspannungsschaltanlage ist ferner vorgesehen, dass das weitere Kontaktssystem als Kolben-Zylinder-Anordnung mit einem mit Erdpotential verbundenen Kolben ausgebildet ist, welcher in Auslösestellung den auf Leistungspotential liegenden Phasenkontakt der Isolierbuchse als Gegenkontakt kontaktiert, wobei der Gegenkontakt vom festen Kontaktstück gebildet ist.

Gemäß einer weiteren vorteilhaften Ausgestaltung der Erfindung ist vorgesehen, dass im Falle der Auslösung durch das Zündgerät der Gasgenerator einen Gasdruck erzeugt, der den beweglichen Kolben der weiteren Kontaktstelle auf den auf Leistungspotential liegenden Gegenkontakt beschleunigt und sich mit diesem elektrisch leitend verbindet.

Hierbei erzeugt der Gasgenerator infolge der Auslösung durch das Zündgerät eine explosionsartige Druckerhöhung des Arbeitsgases, welches den in einem mit Erdpotential verbundenen Zylinder geführten Kolben derart beschleunigt, dass der Kolben wie ein Geschoß auf den Isolierstopfen, welcher den Gegenkontakt verschließt, auftrifft, diesen Stopfen durchdringt und sich mit dem von dem Isolierstopfen verdeckten Phasenkontakt elektrisch leitend verbindet. Entscheidend ist hierbei, dass die kinetische Energie aus dem Kolben bei der formschlüssigen Verbindung durch geeignete plastische Umformung abgebaut wird.

Hierzu ist der bewegliche Kolben auf seiner dem zu kontaktierenden Gegenkontakt zugewandten Stirnseite mit einer klingenartigen scharfen Kante versehen, welche dazu dient, den Isolierstopfen zu durchschneiden und so den dahinter verborgenen Phasenkontakt der Isolierbuchse zu kontaktieren.

Durch die sehr schnelle Bewegung des Kolbens des weiteren Kontaktsystems, der weiterhin mit Erdpotential verbunden ist, und die damit einhergehende Kontaktierung des auf Leistungspotential liegenden hülsenartigen Gegenkontakts wird so ein Kurzschluss zwischen Erdpotential und Leistungspotential herbeigeführt, wodurch wiederum der die Auslösung verursachende Lichtbogen im Schaltergehäuse zum Erlöschen kommt.

Gemäß einer zweckmäßigen Ausgestaltung der erfindungsgemäßen Hochspannungsschaltanlage ist die Befestigung des auf Leistungspotential liegenden hülsenartigen Kontaktsystems trennbar von der Isolierbuchse ausgeführt.

Hierbei erweist sich die Ausgestaltung des als separates, an die Isolierbuchse geschraubten Kontaktsystems als besonders vorteilhaft, da hierdurch ein nach jeder Aktivierung, das heißt nach jeder Auslösung, erforderliche Auswechseln des Gasgenerators vereinfacht ist, weil hierdurch kein Gehäusevolumen für das Auswechseln des Gasgenerators geöffnet werden muss. Es muss lediglich der vorhandene Isolierstopfen, das hülsenartige Kontaktsystem und die Komponenten auf Erdpotential mit dem Gasgenerator ausgewechselt werden.

Diese und weitere vorteilhafte Merkmale sowie Vorteile und Verbesserungen sind Gegenstand der weiteren Ansprüche.

Anhand eines in der beigefügten Zeichnung schematisch gezeigten Ausführungsbeispiels sollen die Erfindung, besondere vorteilhafte Ausgestaltungen und Verbesserungen der Erfindung sowie besondere Vorteile der Erfindung näher erläutert und beschrieben werden.

Es zeigen:
- Fig. 1: einen schematischen Längsschnitt durch einen Gasraum mit einem als Ultraschnell-Kurzschließer dienenden weiteren Kontaktsystem in Ruhestellung; welcher mit einem hier nicht näher gezeigten Schaltergehäuse verbunden ist;
- Fig. 2: einen schematischen Längsschnitt durch den Gasraum gemäß Fig.1 nach erfolgter Auslösung.

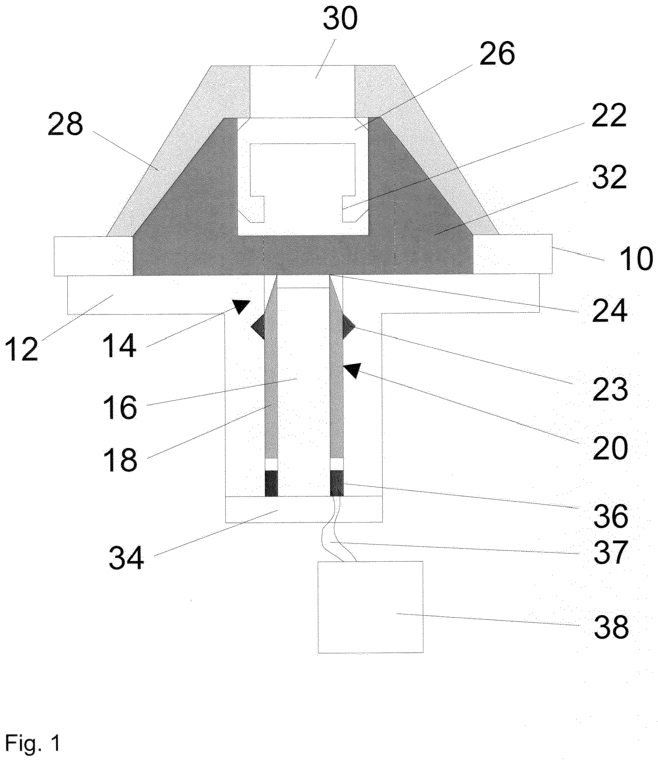

Fig. 1 zeigt einen schematischen Teilschnitt durch ein geerdetes Schaltergehäuse 10 und einer isolierten Kontakt-Durchführung 28 einer Hochspannungsschaltanlage, an welchem ein separates Gehäuse 12 mit einem darin als Ultraschnell-Kurzschließer dienenden weiteren Kontaktsystem 14 angeordnet ist; das sich in Ruhestellung befindet.

Das weitere Kontaktsystem 14 besteht aus einer Kolben-Zylinder-Anordnung mit einer zylindrischen Führung 16 und einem daran längsbeweglich angeordneten Kolben 18 als beweglichen Kontakt 20 sowie aus einem festen Kontakt 22. Der kolbenförmige bewegliche Kontakt 20 ist mittels eines Kontaktringes 23 gegenüber dem zylindrischen Teil des separaten Gehäuses 12 kontaktiert und an seiner dem festen Kontakt 22 zugewandten Seite mit einer scharfen messerartigen Kante 24 versehen, deren Zweck nachfolgend erläutert ist.

Doch soll zunächst der feste Kontakt 22 beschrieben werden. Dieser ist in Verlängerung einer isolierten Kontakt-Durchführung 28 mit darin eingegossenem Kontaktstück 30, die an sich als Gehäusedurchführung bekannt ist, als Aufnahmehülse 26 vorgesehen. Das in die isolierte Kontakt-Durchführung 28 eingegossene Kontaktstück 30 ist einerseits mit einem auf Leistungspotential liegenden, im hier nicht näher gezeigten Schaltergehäuse 10 angeordneten elektrischen Leiter, zum Beispiel Sammelschiene, leitend verbunden und andererseits an der in das separate Gehäuse 12 weisenden Stirnseite mit einer Aufnahmehülse 26, die faktisch den festen Kontakt 22 bildet.

Gemäß der Erfindung liegt, wie bereits angesprochen, die Kolben-Zylinder-Anordnung auf Erdpotential, das heißt, der Führungszylinder 16 ist beispielsweise mit der auf Erdpotential liegenden Gehäusewandung 34 verbunden. Dabei ist der Kolben 18 über die Zylinderwand des separaten Gehäuses 12 ebenfalls mit Erdpotential leitend verbunden, da trotz dessen Gleitmöglichkeit am Führungszylinder 16 eine ausreichende Kontaktierung über den Kontaktring 23 gewährleistet ist.

Koaxial mit dem Kolben 18 ist hierzu im Abstand die Aufnahmehülse 26 als fester Gegenkontakt 22 angeordnet, der an der an sich bekannten isolierten Kontaktdurchführung 28 positioniert und gegenüber der auf Erdpotential liegenden Gehäusewandung 34 isoliert ist. Dieser feste Gegenkontakt 22 ist seinerseits mit dem Leistungspotential verbunden und mittels eines Stopfens 32 aus Isoliermaterial gegenüber dem vom Kolben 18 gebildeten beweglichen Kontakt 20 verschlossen und isoliert, so dass eine zufällige Kontaktierung mit Erdpotential verhindert ist.

Auf der dem festen Kontakt 22 zugewandten Seite des vom Kolben 18 gebildeten beweglichen Kontakts 20 ist eine scharfe messerartige Kante 24 vorgesehen, die dazu dient, gegebenenfalls, das heißt im Auslösefall, den Isolierstopfen 32 zur Abdeckung der Aufnahmehülse 26 zu durchstoßen und die elektrisch leitende Verbindung mit dem festen Kontakt 22, das heißt mit dem Leistungspotential, herzustellen.

Innerhalb oder in Verlängerung des Zylinders 16 ist ein Gasgenerator 36 angeordnet, der seinerseits über eine gasdicht aus dem separaten Gehäuse 12 herausgeführte Zündleitung 37 mit einem Zündgerät 38 verbunden ist, welches wiederum von einer hier nicht dargestellten, im Inneren des Schaltergehäuses 10 der Hochspannungsschaltanlage angeordneten Auslöse- beziehungsweise Detektionseinheit angesteuert wird.

Das Zündgerät 38, das mit der hier nicht näher gezeigten Detektionseinheit verbunden ist, soll bei Auftreten eines Fehlerzustandes, zum Beispiel ein Lichtbogen, im Schaltergehäuse 10 umgehend infolge seiner Ansteuerung durch die Auslöse- beziehungsweise Detektionseinheit dann sofort den Gasgenerator 36 starten. Der Gasgenerator 36 erzeugt daraufhin umgehend ein Arbeitsgas, welches vom Zündgerät 38 gezündet wird und hierdurch sich explosionsartig ausdehnt und einen Druckstoß hervorruft, welcher den Kolben 18 in Richtung auf das feste Kontaktstück 22 beschleunigt.

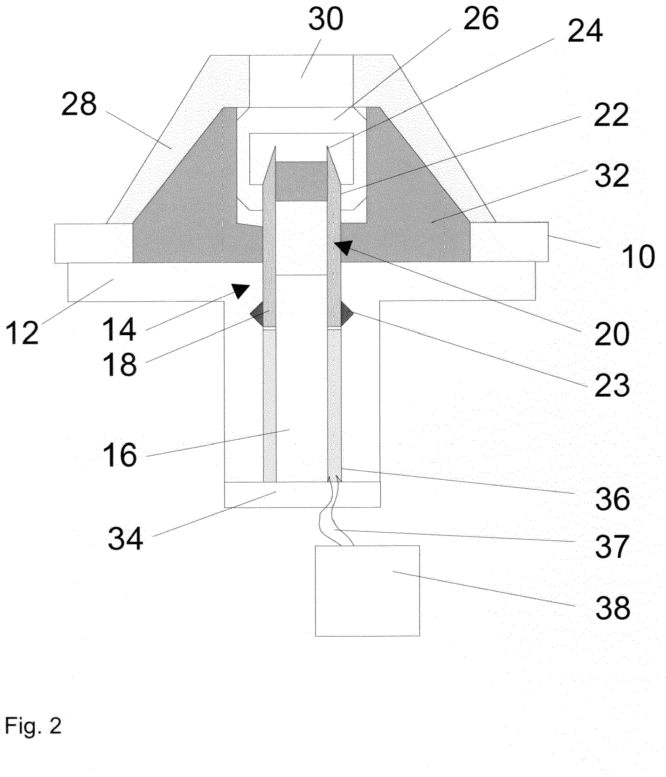

In Fig. 2 ist die gleiche Anordnung, wie in Fig. 1 gezeigt, Dabei sind gleiche Merkmale jeweils mit den entsprechenden Bezugsziffern versehen. Fig. 2 zeigt demnach die Anordnung gemäß Fig. 1 jedoch im ausgelösten Zustand, das heißt, das vom Kolben 18 gebildete bewegliche Kontaktstück 20 ist infolge Beaufschlagung durch den Gasgenerator 36 aus seinem Führungszylinder 16 soweit herausgetreten, dass der Kontakt mit dem festen Kontaktstück 22 geschlossen ist.

Hierzu entzündet das Zündgerät 38 eine vom Gasgenerator 36 erzeugte Gasfüllung von Arbeitsgas, die sich daraufhin explosionsartig ausdehnt und durch den hierdurch verursachten Druckstoß den beweglichen Kolben 18 in Richtung der als Festkontakt 22 dienenden Aufnahmehülse 26 beschleunigt, mit welcher sich der als bewegliches Kontaktstück 20 dienende Kolben 18 formschlüssig verbindet und hierdurch kontrolliert einen Kurzschluss zwischen Leistungspotential und Erdpotential herbeiführt.

Der infolge dieses Kurzschlusses fließende Kurzschlussstrom führt zu einem spontanen Spannungsabfall, der den die Auslösung des Schnell-Kurzschließers 12 verursachenden Lichtbogen umgehend erlöschen lässt, so dass eine unerwünschte Beschädigung der betreffenden Schaltkammer beziehungsweise des Schaltergehäuses 10 vermieden wird. Gleichzeitig erfolgt die Stromabschaltung durch einen Leistungsschalter.

Wird also ein interner, das heißt im Schaltergehäuse 10, Störlichtbogen erkannt und der Gasgenerator 36 durch die Zündeinheit 38 gezündet, so wird durch den Gasgenerator 36 ein extrem schneller Druckaufbau erzeugt, der den beweglichen Kontakt 20 über die Isolierstrecke in den festen Kontakt 22 schießt. Die Kontakte 20 und 22 bilden dabei eine sichere stromführende Verbindung, um den Kurzschluss mit Erde zu bilden und den internen Lichtbogen zu löschen. Der Kurzschluss Strom wird dann über einen Leistungsschalter gelöscht.

Der Isolierstopfen 32 besteht vorzugsweise aus einem weichen Isoliermaterial, zum Beispiel aus Silikonelastomer.

Wesentlich für diese Erfindung ist, dass am Kontaktsystem 14 der bewegliche Kontakt 20 eine klingenartige, scharfe umlaufende Kante 24 in seinem vorderen Bereich aufweist.

Wird ein Störlichtbogen detektiert und der Gasgenerator 36 gezündet, entsteht um die zylindrische Führung 16, das heißt um den Führungszylinder 16, des beweglichen Kontaktes 20 ein extremer Druckanstieg, der zu einer Beschleunigung des beweglichen Kontaktes 20 führt. Dabei wird von der scharfen messerartigen Kante 24 des beweglichen Kontaktes 20 der Isolierstopfen 32 zylinderförmig durchstoßen und der bewegliche Kontakt 20 in die den feststehenden Kontakt 22 bildende Aufnahmehülse 26 geschossen. Dadurch kommt es zu einem Kurzschluss über den festen Kontakt 22, den beweglichen Kontakt 20 und das separate Gehäuse 12 mit Erde.

Vorzugsweise ist das Kontaktsystem 14 dabei aus relativ weichem Material hergestellt, damit durch Verformungsarbeit der Teile sowohl Bewegungsenergie vernichtet wird als auch ein sicherer Kontakt erzeugt wird.

Ein einmal ausgelöster Ultra-Schnellender (UFES) kann gemäß der Erfindung ohne Öffnung des Gasraums, das heißt des Schaltergehäuses 10, von außen gegen einen neuen Schnellerder ausgetauscht werden. Dazu wird der Schnellerder abgeschraubt, die Isolierbuchse 28 und das ausgestanzte Stück entfernt und das Kontaktsystem 14 aus der Buchse geschraubt. Anschließend werden die Teile durch neue Teile ersetzt.

Das das bewegliche Kontaktstück (20) ist außerhalb des Gasraums untergebracht, wodurch, wie erläutert, beim Austausch nach dem Auslösen keine Gasarbeiten entstehen.

Der Gasgenerator 36 ist ferner von außen zugänglich, so dass auch der turnusmäßige Austausch bei einer anzunehmenden Lebensdauer von 15 Jahren erfolgen kann, ohne einen Gasraum öffnen zu müssen.

Schließlich kann das bewegliche Kontaktstück 20 durch eine geeignete mechanische Sicherung in seiner Position gehalten werden, so dass Vibrationen nicht zum ungewollten Einschalten führen. Die mechanische Sicherung ist dabei so ausgelegt, dass sie durch den bei Auslösung des Gasgenerators 36 entstehenden Gasdruck beziehungsweise infolge der hierdurch verursachten Beschleunigung des den beweglichen Kontakt 20 bildenden Kolbens 18 aufgebrochen oder ausgelöst wird.

### Bezugszeichenliste

- 10: geerdetes Gehäuse, Schaltergehäuse
- 12: separates Gehäuse
- 14: weiters Kontaktsystem
- 16: zylindrische Führung, Führungszylinder
- 18: Kolben
- 20: beweglicher Kontakt, bewegliches Kontaktstück
- 22: fester Kontakt, festes Kontaktstück, Gegenkontakt
- 23: Kontaktring
- 24: scharfe messerartige Kante
- 26: Aufnahmehülse als fester Kontakt
- 28: Isolierbuchse, isolierte Kontakt-Durchführung
- 30: in die isolierte KontaktDurchführung eingegossener Kontakt, Phasenkontakt
- 32: Isolierstopfen zur Abdeckung der Aufnahmehülse
- 34: Gehäusewandung
- 36: Gasgenerator
- 37: Zündleitung
- 38: Zündgerät

## Patentansprüche

1. Hochspannungsschaltanlage mit einem Schaltergehäuse (10), einem als Kolben-Zylinder-Anordnung ausgeführten Ultraschnell-Kurzschließer (14) und wenigstens einem Kontaktpaar, wobei
• das Kontaktpaar aus einem festen Kontakt (22) und einem beweglichen Kontakt (20) gebildet wird,
• der feste Kontakt (22) mit einem Leistungspotential verbunden ist, und
• der bewegliche Kontakt (20) auf Erdpotential liegt,
**dadurch gekennzeichnet, dass**
• das Schaltergehäuse (10) mit einem Isoliergas, beispielsweise SF₆, gefüllt ist und einen Gasraum bildet,
• an dem Schaltergehäuse (10) wenigstens eine Isolierbuchse (28) mit einem Phasenkontakt (30) vorgesehen ist, welche mittels eines Isolierstopfens (32) abgedeckt ist,
• außerhalb des Schaltergehäuses (10) an der wenigstens einen Isolierbuchse (28) ein als Kolben-Zylinder-Anordnung ausgeführtes weiteres Kontaktsystem (14) angeordnet ist, welches als Ultraschnell-Kurzschließer arbeitet und bei Vorliegen eines Fehlerzustandes in dem Schaltergehäuse (10) den Phasenkontakt (30) der Isolierbuchse (28) mit Erdpotential kurzschließt, indem der bewegliche Kolben (18) der Kolben-Zylinder-Anordnung auf seiner dem zu kontaktierenden festen Kontaktstück (22) zugewandten Stirnseite mit einer Kante (24) versehen ist, welche den Isolierstopfen (32) bei Vorliegen eines Fehlerzustandes durchschneidet.

2. Hochspannungsschaltanlage nach Anspruch 1, **dadurch gekennzeichnet, dass** der feste Kontakt (22) in Verlängerung einer isolierten Kontakt-Durchführung (28) mit darin eingegossenem Kontaktstück (30) als Aufnahmehülse (26) vorgesehen ist.

3. Hochspannungsschaltanlage nach Anspruch 1 oder 2, **dadurch gekennzeichnet, dass** als ein Stellantrieb für das bewegliche Kontaktstück (20) eine Auslöseeinheit vorgesehen ist, die einen Gasgenerator (36) aufweist, der mit einem Zündgerät (38) zusammenarbeitet.

4. Hochspannungsschaltanlage nach Anspruch 3, **dadurch gekennzeichnet, dass** eine Detektionseinheit zur Erfassung von Fehlerzuständen in dem Schaltergehäuse (10) vorgesehen ist, die mit der Auslöseeinheit zusammenarbeitet, welche den Gasgenerator (36) ansteuert.

5. Hochspannungsschaltanlage nach einem der vorhergehenden Ansprüche, **dadurch gekennzeichnet, dass** das feste Kontaktstück (22) und das bewegliche Kontaktstück (20) so ausgestaltet sind, dass sie sich beim Schließen plastisch umformen und eine feste Verbindung eingehen.

6. Hochspannungsschaltanlage nach einem der vorhergehenden Ansprüche, **dadurch gekennzeichnet, dass** der Fehlerzustand ein interner, im Schaltergehäuse (10) erkannter Störlichtbogen ist.

7. Hochspannungsschaltanlage nach einem der vorhergehenden Ansprüche, **dadurch gekennzeichnet, dass** der Isolierstopfen (32) aus einem weichen Isoliermaterial, zum Beispiel Silikonelastomer, besteht.

8. Hochspannungsschaltanlage nach einem der vorhergehenden Ansprüche, **dadurch gekennzeichnet, dass** der bewegliche Kontakt (20) außerhalb des Gasraums untergebracht ist.

9. Hochspannungsschaltanlage nach Anspruch 3, **dadurch gekennzeichnet, dass** der Gasgenerator (36) von außen zugänglich ist, so dass ein turnusmäßiger Austausch erfolgen kann, ohne den Gasraum zu öffnen.

10. Hochspannungsschaltanlage nach einem der vorhergehenden Ansprüche, **dadurch gekennzeichnet, dass** der der bewegliche Kontakt (20) vor dem Auslösen des Ultraschnell-Kurzschließers durch eine mechanische Sicherung in seiner Position gehalten wird, so dass Vibrationen nicht zum ungewollten Einschalten führen.

11. Hochspannungsschaltanlage nach einem der vorherigen vorhergehenden Ansprüche, **dadurch gekennzeichnet, dass** der bewegliche Kontakt (20) mit der Kolben-Zylinder-Anordnung in einem separaten Gehäuse (12) angeordnet ist, welches am Schaltergehäuse (10) angeordnet ist.

## Claims

1. High-voltage switchgear comprising a switch housing (10), an ultra-fast short-circuiting device (14) configured as a piston/cylinder arrangement and at least one pair of contacts, wherein
• the pair of contacts is formed by a fixed contact (22) and a movable contact (20),
• the fixed contact (22) is connected to a power potential, and
• the movable contact (20) is at earth potential, **characterized in that**
• the switch housing (10) is filled with an insulating gas, for example SF₆, and forms a gas space,
• at least one insulating bush (28) with a phase contact (30) is provided on the switch housing (10) and is covered by means of an insulating plug (32),
• a further contact system (14), which is in the form of a piston/cylinder arrangement, is arranged outside the switch housing (10) on the at least one insulating bush (28), operates as an ultra-fast short-circuiting device and, in the event of the presence of a fault state in the switch housing (10), short-circuits the phase contact (30) of the insulating bush (28) with earth potential by the movable piston (18) of the piston/cylinder arrangement being provided, on its end side facing the fixed contact piece (22) with which contact is to be made, with an edge (24), which pierces the insulating plug (32) in the event of the presence of a fault state.

2. High-voltage switchgear according to Claim 1, **characterized in that** the fixed contact (22) is provided as a receiving sleeve (26), as an extension of an insulated contact bushing (28) with a contact piece (30) cast therein.

3. High-voltage switchgear according to Claim 1 or 2, **characterized in that** a tripping unit, which has a gas generator (36) that interacts with an ignition device (38) is provided as a servodrive for the movable contact piece (20).

4. High-voltage switchgear according to Claim 3, **characterized in that** a detection unit for detecting fault states in the switch housing (10), which interacts with the tripping unit that actuates the gas generator (36), is provided.

5. High-voltage switchgear according to one of the preceding claims, **characterized in that** the fixed contact piece (22) and the movable contact piece (20) are configured such that, as they close, they plastically deform and enter into a fixed connection.

6. High-voltage switchgear according to one of the preceding claims, **characterized in that** the fault state is an internal arcing fault detected in the switch housing (10).

7. High-voltage switchgear according to one of the preceding claims, **characterized in that** the insulating plug (32) consists of a soft insulating material, for example silicone elastomer.

8. High-voltage switchgear according to one of the preceding claims, **characterized in that** the movable contact (20) is accommodated outside the gas space.

9. High-voltage switchgear according to Claim 3, **characterized in that** the gas generator (36) is accessible from the outside, with the result that a scheduled replacement can be performed without opening the gas space.

10. High-voltage switchgear according to one of the preceding claims, **characterized in that**, before the tripping of the ultra-fast short-circuiting device, the movable contact (20) can be held in its position by a mechanical securing device, with the result that vibrations do not result in undesired switching on.

11. High-voltage switchgear according to one of the preceding claims, **characterized in that** the movable contact (20) is arranged with the piston/cylinder arrangement in a separate housing (12), which is arranged on the switch housing (10).

## Revendications

1. Système de commutation haute tension comportant un boîtier de commutateur (10), un de court-circuiteur ultra-rapide (14) réalisé sous la forme d'un ensemble piston-cylindre et au moins une paire de contacts, dans lequel
- la paire de contacts est formée d'un contact fixe (22) et d'un contact mobile (20),
- le contact fixe (22) est relié à un potentiel de puissance, et
- le contact mobile (20) est au potentiel de terre, **caractérisé en ce que**
- le boîtier de commutateur (10) est rempli d'un gaz isolant, par exemple de SF₆, et forme un compartiment de gaz,
- il est prévu sur le boîtier de commutateur (10) au moins une douille isolante (28) comportant un contact de phase (30), qui est recouverte au moyen d'un bouchon isolant (32),
- à l'extérieur du boîtier de commutation (10), sur l'au moins une douille isolante (28), est disposé un autre système de contact (14) réalisé sous la forme d'un ensemble piston-cylindre, qui fonctionne en tant que court-circuiteur ultra-rapide et qui court-circuite au potentiel de terre le contact de phase (30) de la douille isolante (28) en cas d'état de défaut dans le boîtier de commutateur (10), en faisant en sorte que le piston mobile (18) de l'ensemble piston-cylindre soit pourvu, sur sa face frontale tournée vers la pièce de contact fixe (22) à mettre en contact, d'une arête (24) qui coupe le bouchon isolant (32) en présence d'un état de défaut.

2. Système de commutation haute tension selon la revendication 1, **caractérisé en ce que** le contact fixe (22) est prévu sous la forme d'un manchon de réception (26) dans le prolongement d'une traversée de contact isolée (28) dans laquelle est coulée une pièce de contact (30) .

3. Système de commutation haute tension selon la revendication 1 ou 2, **caractérisé en ce qu'**il est prévu en tant qu'actionneur destiné à la pièce de contact mobile, une unité de déclenchement (20) qui comporte un générateur de gaz (36) coopérant avec un dispositif d'allumage (38).

4. Système de commutation haute tension selon la revendication 3, **caractérisé en ce qu'**il est prévu dans le boîtier de commutateur (10) une unité de détection pour la détection d'états de défaut, coopérant avec l'unité de déclenchement qui commande le générateur de gaz (36).

5. Système de commutation haute tension selon l'une des revendications précédentes, **caractérisé en ce que** la pièce de contact fixe (22) et la pièce de contact mobile (20) sont conçues de manière à ce qu'elles se déforment plastiquement lors de la fermeture et à ce qu'elles soient reliées de manière fixe.

6. Système de commutation haute tension selon l'une des revendications précédentes, **caractérisé en ce que** l'état de défaut est un arc électrique parasite interne détecté dans le boîtier de commutateur (10).

7. Système de commutation haute tension selon l'une des revendications précédentes, **caractérisé en ce que** le bouchon isolant (32) est constitué d'un matériau isolant mou, par exemple d'un élastomère de silicone.

8. Système de commutation haute tension selon l'une des revendications précédentes, **caractérisé en ce que** le contact mobile (20) est situé à l'extérieur du compartiment de gaz.

9. Système de commutation haute tension selon la revendication 3, **caractérisé en ce que** le générateur de gaz (36) est accessible de l'extérieur de manière à ce qu'un échange régulier puisse avoir lieu sans ouvrir le compartiment de gaz.

10. Système de commutation haute tension selon l'une des revendications précédentes, **caractérisé en ce que** le contact mobile (20) est maintenu dans sa position par une sécurité mécanique avant que le court-circuiteur à ultrasons ne soit déclenché, de manière à ce que des vibrations n'entraînent pas de mise en fonctionnement involontaire.

11. Système de commutation haute tension selon l'une des revendications précédentes, **caractérisé en ce que** le contact mobile (20) est disposé avec l'ensemble piston-cylindre dans un boîtier séparé (12), qui est disposé sur le boîtier de commutateur (10).
